# EUROPÄISCHE PATENTSCHRIFT

(11) **EP 1 176 576 B1**
(45) Veröffentlichungstag und Bekanntmachung des Hinweises auf die Patenterteilung: **22.12.2004**
(21) Anmeldenummer: 01114038.1
(22) Anmeldetag: 08.06.2001
(51) Int. Cl.: G09F 15/00, G09F 15/02, G09F 17/00

(54) **Plakatleiste**
Mounting strip for posters
Bande de montage pour affiches

(30) Priorität: 27.07.2000 DE 20012962 U
(43) Veröffentlichungstag der Anmeldung: 30.01.2002
(73) Patentinhaber: Simon, Michael, 90768 Fürth (DE)
(72) Erfinder: Simon, Michael, 90768 Fürth (DE)
(74) Vertreter: Rau, Albrecht

(56) Entgegenhaltungen:
- US-A- 5 732 494
- US-A- 5 893 227

## Beschreibung

Die Erfindung betrifft eine Plakatleiste gemäß dem Oberbegriff des Anspruches 1.

Es ist durch offenkundige Vorbenutzung bekannt, Plakate und insbesondere Poster im Bereich ihres oberen Randes mit einer Plakatleiste zu versehen und diese dann frei im Raum aufzuhängen oder an einer Wand zu befestigen. Derartige Plakatleisten weisen ein ringzylindrisches Profil mit einem längs verlaufenden Schlitz auf. Im Bereich des Schlitzes liegen zwei Wandabschnitte flächig aufeinander, zwischen denen das Plakat geklemmt und somit festgehalten wird. Nachteilig an dieser Anordnung ist, daß das Plakat ohne weiteres aus dem Schlitz gezogen werden kann. Darüber hinaus ist es häufig nicht möglich, das Plakat relativ zu der Plakatleiste genau zu positionieren, um sicherzustellen, daß das Plakat gegenüber der Wand ausgerichtet ist. Selbst ein komplettes Herabfallen des Plakates ist möglich.

Der Erfindung liegt somit die Aufgabe zugrunde, eine Plakatleiste zu schaffen, bei der die Verbindung mit dem Plakat verbessert ist.

Diese Aufgabe wird durch die Merkmale des kennzeichnenden Teiles des Anspruches 1 gelöst.

Weitere vorteilhafte Ausgestaltungen der Erfindung ergeben sich aus den Unteransprüchen.

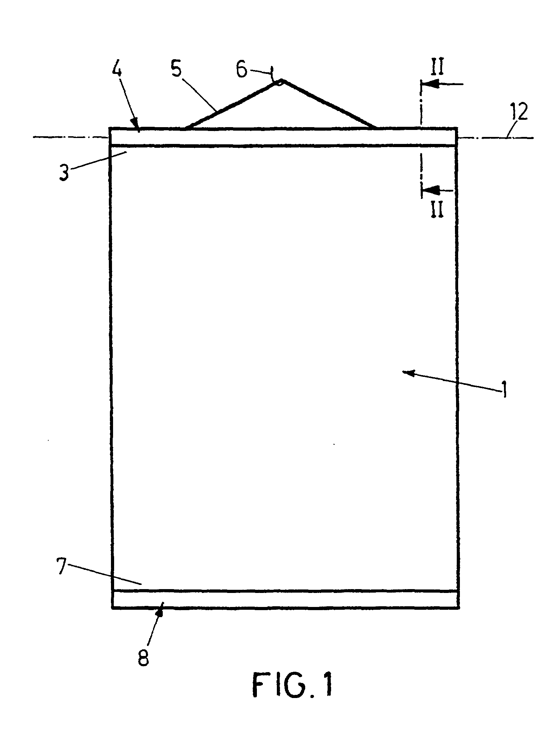

Zusätzliche Vorteile und Einzelheiten der Erfindung ergeben sich aus der Beschreibung eines Ausführungsbeispieles anhand der Zeichnung. Es zeigen
- Fig. 1: ein Plakat mit einer Plakatleiste und
- Fig. 2: einen Querschnitt gemäß der Schnittlinie II-II in Fig. 1.

Ein Plakat 1, das aus Papier, Stoff oder anderen geeigneten Materialien bestehen kann, weist zur Befestigung des Plakates 1 frei im Raum oder an einer Wand 2 an seinem oberen Rand 3 eine Plakatleiste 4 auf, die auch als Hohlrund-Plakatklemmleiste bezeichnet wird. Die Plakatleiste 4, die mit dem Plakat 1 verbunden ist, weist eine an zwei Punkten mit der Plakatleiste 4 verbundene Aufhängeschnur 5 auf, die über einen in der Wand 2 befestigten Haken 6 gehängt ist. Im Bereich des unteren Randes 7 des Plakates 1 ist eine mit dem Plakat 1 verbundene Abschlußleiste 8 vorgesehen, die das Plakat 1 nach unten hin beschwert und ein glattes Hängen des Plakates 1 an der Wand 2 sicherstellt. Die Abschlußleiste 8 weist im wesentlichen denselben Aufbau auf wie die Plakatleiste 4, wobei keine Aufhängeschnur vorgesehen ist. Sie ist aber für ein gerades Hängeverhalten des Plakates 1, vor allem eines Papier- und PVC-Plakates, von entscheidender Bedeutung, damit ein gerades Hängeverhalten gewährleistet wird.

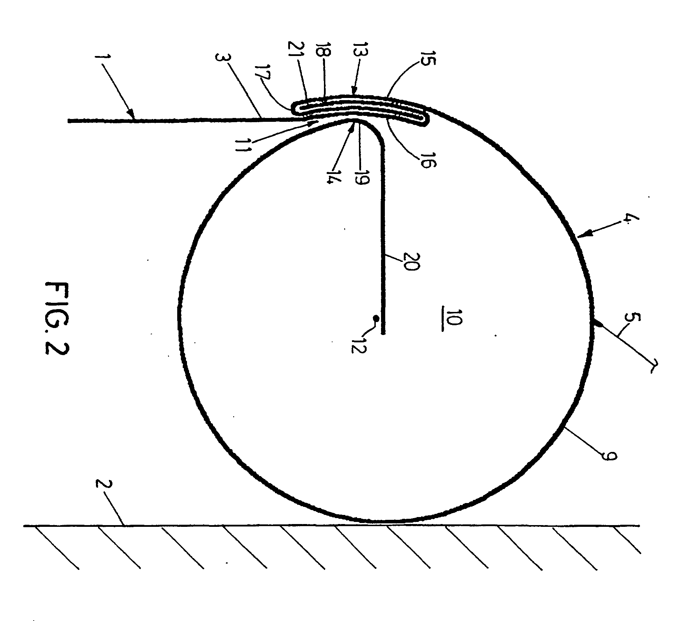

Im folgenden wird die Plakatleiste 4 unter Bezugnahme auf Fig. 2 detailliert beschrieben. Die Plakatleiste 4 weist einen im wesentlichen ringzylindrischen Grundkörper 9 auf. Der Grundkörper 9 kann auch einen nicht kreisförmigen, insbesondere ovalen, Querschnitt aufweisen. Der Grundkörper 9 umschließt einen Innenraum 10. Der Grundkörper 9 weist einen sich über die volle Länge des Grundkörpers 9 erstreckenden, längs verlaufenden Spalt 11 auf. Der Grundkörper 9 weist einen den Spalt 11 in radialer Richtung bezüglich der Mittel-Längs-Achse 12 nach außen begrenzenden Randbereich 13 auf, der mit dem Grundkörper 9 einteilig ausgebildet ist. Der Spalt 11 wird in radialer Richtung nach innen durch einen einteilig mit dem Grundkörper 9 ausgebildeten, dem Randbereich 13 gegenüberliegenden Randbereich 14 begrenzt. Der Randbereich 13 weist einen einteilig mit dem Grundkörper 9 ausgebildeten, sich direkt an diesen anschließenden Wandabschnitt 15 sowie einen in radialer Richtung innen auf dem Wandabschnitt 15 flächig aufliegenden Wandabschnitt 16 auf, der über eine Biegekante 17 mit dem Wandabschnitt 15 verbunden ist. Die Wandabschnitte 15 und 16 begrenzen einen Klemmspalt 18, der zum Innenraum 10 offen ist. Der Randbereich 14 weist eine abgerundete, mit dem Grundkörper 9 einteilig ausgebildete Klemmkante 19 auf, die in Richtung auf den Wandabschnitt 16 federnd vorgespannt ist. An die Klemmkante 19 schließt sich ein in Richtung auf die Mittel-Längs-Achse 12 vorstehender Wandabschnitt 20 an.

Zur Verbindung des Plakates 1 mit der Plakatleiste 4 ist der obere Rand 3 des Plakates 1 von unten nach oben durch den Spalt 11 und der Randstreifen 21 von oben nach unten in den Klemmspalt 18 geführt und dort festgeklemmt. Die Klemmkante 19 liegt gegen das Plakat 1 an und beklemmt dieses im Spalt 11 und im Klemmspalt 18. Das Plakat 1 ist, wie aus Fig. 2 ersichtlich, vertikal aus dem Spalt 11 nach unten herausgeführt und hängt somit frei nach unten. Durch die Doppelbeklemmung des Plakates 1 in dem Spalt 11 und dem Klemmspalt 18 sowie die Umlenkung des Randstreifens 21 um 180° entsteht ein besonders guter Halt, damit das Plakat 1 nicht aus der Plakatleiste 4 rutschen oder herausgezogen werden kann. Durch die Festlegung des Plakates 1 in dem Klemmspalt 18 wird auch sichergestellt, daß das Plakat 1, das auch aus Stoff bestehen kann, über seine ganze Breite flächig und faltenfrei festgelegt ist.

## Patentansprüche

1. Plakatleiste zur Befestigung an einem Plakat (1) mit
a) einem im wesentlichen ringzylindrischen Grundkörper (9) mit einem längsverlaufenden Spalt (11) zur Aufnahme des mit der Plakatleiste zu verbindenden Plakats (1),
b) einem einteilig mit dem Grundkörper (9) ausgebildeten, benachbart zu dem Spalt (11) angeordneten ersten Randbereich (13) und
c) einem einteilig mit dem Grundkörper (9) ausgebildeten, benachbart zu dem Spalt (11) angeordneten, dem ersten Randbereich (13) gegenüberliegenden zweiten Randbereich (14), **dadurch gekennzeichnet, daß**
d) der erste Randbereich (13) zwei einteilig miteinander ausgebildete, flächig aufeinanderliegende Klemmwände (15, 16) zur beklemmenden Aufnahme eines Randstreifens (21) des Plakats (1) aufweist.

2. Plakatleiste gemäß Anspruch 1, **dadurch gekennzeichnet, daß** zwischen den beiden Klemmwänden (15, 16) ein Klemmspalt (18) gebildet ist.

3. Plakatleiste gemäß Anspruch 2, **dadurch gekennzeichnet, daß** die beiden Klemmwände (15, 16) an der nach außen weisenden Kante des ersten Randbereichs (13) miteinander verbunden sind.

4. Plakatleiste gemäß Anspruch 2 oder 3, **dadurch gekennzeichnet, daß** der Klemmspalt (18) zur Innenseite des Grundkörpers (9) zur Aufnahme eines Randstreifens (21) des Plakats (1) offen ist.

5. Plakatleiste gemäß einem der vorangehenden Ansprüche, **dadurch gekennzeichnet, daß** der zweite Randbereich (14) eine einteilig mit dem Grundkörper (9) ausgebildete Klemmkante (19) zur Beklemmung des durch den Spalt (11) verlaufenden Plakats (1) aufweist.

6. Plakatleiste gemäß Anspruch 5, **dadurch gekennzeichnet, daß** die Klemmkante (19) zusätzlich den in dem Klemmspalt (18) angeordneten Randstreifen (21) beklemmt.

7. Plakatleiste gemäß Anspruch 5 oder 6, **dadurch gekennzeichnet, daß** der zweite Randbereich (14) einen sich von der Klemmkante (19) zur Mitte des Grundkörpers (9) hin erstreckenden Wandabschnitt (20) aufweist.

8. Plakatleiste gemäß einem der Ansprüche 5 bis 7, **dadurch gekennzeichnet, daß** die Klemmkante (19) einen abgerundeten Querschnitt aufweist.

9. Plakatleiste gemäß einem der Ansprüche 2 bis 8, **dadurch gekennzeichnet, daß** der Spalt (11) und der Klemmspalt (18) benachbart zueinander angeordnet sind.

10. Plakatleiste gemäß Anspruch 1, **dadurch gekennzeichnet, daß** das Plakat (1) unter Bildung einer Schleife in dem Spalt (11) und in dem Klemmspalt (18) festlegbar ist.

## Claims

1. A placard strip to be fixed to a placard (1), comprising
a) a substantially annular cylindrical main body (9) with a longitudinal slit (11) for the accommodation of the placard (1) that is to be connected with the placard strip;
b) a first marginal area (13) which is formed in a single piece with the main body (9) and disposed contiguous to the slit (11); and
c) a second marginal area (14) which is formed in a single piece with the main body (9) and disposed contiguous to the slit (11) and opposite the first marginal area (13); **characterized in that**
d) the first marginal area (13) has two clamping walls (15, 16) which are formed in a single piece with each other and rest planely on each other, receiving and clamping a margin (21) of the placard (1).

2. A placard strip according to claim 1, **characterized in that** a clamping gap (18) is formed between the two clamping walls (15, 16).

3. A placard strip according to claim 2, **characterized in that** the two clamping walls (15, 16) are connected with each other on the outward edge of the first marginal area (13).

4. A placard strip according to claim 2 or 3, **characterized in that** the clamping gap (18) is open towards the interior of the main body (9) for the accommodation of a margin (21) of the placard (1).

5. A placard strip according to one of the preceding claims, **characterized in that** the second marginal area (14) has a clamping edge (19) which is formed in a single piece with the main body (9), clamping the placard (1) that passes through the slit (11).

6. A placard strip according to claim 5, **characterized in that** the clamping edge (19) additionally clamps the margin (21) that is disposed in the clamping gap (18).

7. A placard strip according to claim 5 or 6, **characterized in that** the second marginal area (14) has a wall section (20) that extends from the clamping edge (19) to the center of the main body (9).

8. A placard strip according to one of claims 5 to 7, **characterized in that** the clamping edge (19) has a rounded cross-sectional shape.

9. A placard strip according to one of claims 2 to 8, **characterized in that** the slit (11) and the clamping gap (18) are contiguous to each other.

10. A placard strip according to claim 1, **characterized in that** the placard (1) is fixable in the slit (11) and in the clamping gap (18), forming a loop.

## Revendications

1. Bande de montage pour affiche destinée à être fixée sur une affiche (1) avec
a) un corps de base (9) sensiblement cylindrique annulaire comprenant une fente (11) s'étendant longitudinalement, destinée à recevoir l'affiche (1) devant être reliée à la bande de montage pour affiche,
b) une première zone marginale (13) conçue en une seule pièce avec le corps de base (9), disposée au voisinage de la fente (11) et
c) une seconde zone marginale (14) conçue en une seule pièce avec le corps de base (9), disposée au voisinage de la fente (11), opposée à la première zone marginale (13),
**caractérisée en ce que**
d) la première zone marginale (13) comprend deux parois de serrage (15, 16) situées l'une sur l'autre à plat, conçues en une seule pièce l'une avec l'autre, destinées à loger par serrage une bande latérale (21) de l'affiche (1).

2. Bande de montage pour affiche selon la revendication 1, **caractérisée en ce qu'**une bande de serrage (18) est formée entre les deux parois de serrage (15, 16).

3. Bande de montage pour affiche selon la revendication 2, **caractérisée en ce que** les deux bandes de serrage (15, 16) sont reliées l'une à l'autre sur l'arête orientée vers l'extérieur de la première zone marginale (13).

4. Bande de montage pour affiche selon la revendication 2 ou 3, **caractérisée en ce que** la fente de serrage (18) est ouverte vers le côté intérieur du corps de base (9) pour loger une bande latérale (21) de l'affiche (1).

5. Bande de montage pour affiche selon l'une des revendications précédentes, **caractérisée en ce que** la seconde zone marginale (14) comprend une arête de serrage (19) conçue en une seule pièce avec le corps de base (9) pour serrer l'affiche (1) s'étendant à travers la fente (11).

6. Bande de montage pour affiche selon la revendication 5, **caractérisée en ce que** l'arête de serrage (19) serre en plus la bande latérale (21) disposée dans la fente de serrage (18).

7. Bande de montage pour affiche selon la revendication 5 ou 6, **caractérisée en ce que** la seconde zone marginale (14) comprend une section de paroi (20) s'étendant depuis l'arête de serrage (19) vers le centre du corps de base (9).

8. Bande de montage pour affiche selon l'une des revendications 5 à 7, **caractérisée en ce que** l'arête de serrage (19) comprend une section arrondie.

9. Bande de montage pour affiche selon l'une des revendications 2 à 8, **caractérisée en ce que** la fente (11) et la fente de serrage (18) sont disposées au voisinage l'une de l'autre.

10. Bande de montage pour affiche selon la revendication 1, **caractérisée en ce que** l'affiche (1) peut être fixée en formant une boucle dans la fente (11) et dans la fente de serrage (18).
